# EUROPEAN PATENT APPLICATION

(11) **EP 4 606 846 A1**
(43) Date of publication of application: **27.08.2025**
(21) Application number: 23890578.0
(22) Date of filing: 31.10.2023
(51) Int. Cl.: C08J 5/18

(54) **ELECTRONIC DEVICE, DISPLAY SCREEN, PROTECTIVE FILM SET, PROTECTIVE FILM AND PREPARATION METHOD THEREFOR**

(30) Priority: 16.11.2022 CN 202211434838
(71) Applicant: Huawei Technologies Co., Ltd., Shenzhen, Guangdong 518129 (CN)
(72) Inventor: GAO, Jiaying, Shenzhen, Guangdong 518129 (CN); XIAO, Tian, Shenzhen, Guangdong 518129 (CN); LONG, Haohui, Shenzhen, Guangdong 518129 (CN); LI, Jianhui, Shenzhen, Guangdong 518129 (CN); HUANG, Limei, Shenzhen, Guangdong 518129 (CN)
(74) Representative: MERH-IP Matias Erny Reichl Hoffmann Patentanwälte PartG mbB
(86) International application number: PCT/CN2023/128353
(87) International publication number: WO 2024/104142

(57) **Abstract**

Embodiments of this application disclose an electronic device, a display, a protective film assembly, and a protective film and a preparation method therefor, and relate to the field of thin films, to resolve a problem that a display is likely to be damaged by an external force. A specific solution is as follows: The protective film includes a first film layer and a second film layer, the second film layer is connected to at least one surface of the first film layer, and compared with the first film layer, the second film layer is closer to a surface of a light exit side of the display. The first film layer includes a reinforcing material and a base material that are mixed, an elastic modulus of the reinforcing material is greater than an elastic modulus of the base material, and an elastic modulus of the first film layer is greater than an elastic modulus of the second film layer. The first film layer is formed by mixing a fiber and a base material whose refractive index difference is less than or equal to 0.01. The protective film can protect the display, and has little negative impact on optical performance of the display.

## Description

This application claims priority to Chinese Patent Application No. 202211434838.2, filed with the China National Intellectual Property Administration on November 16, 2022 and entitled "ELECTRONIC DEVICE, DISPLAY, PROTECTIVE FILM ASSEMBLY, AND PROTECTIVE FILM AND PREPARATION METHOD THEREFOR", which is incorporated herein by reference in its entirety.

### TECHNICAL FIELD

Embodiments of this application relate to the field of thin films, and in particular, to an electronic device, a display, a protective film assembly, and a protective film and a preparation method therefor.

### BACKGROUND

A display is an important component of an electronic device. Due to special properties of a material of the display, the display is likely to be damaged under effect of an external force. In addition, the entire display usually needs to be replaced after being damaged, resulting in high use costs.

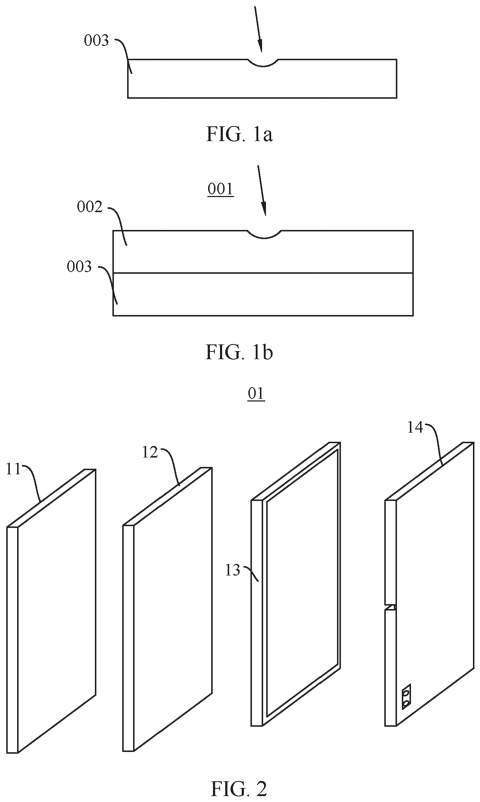

FIG. 1a is a diagram of a structure of a screen 003 to which a force is applied. FIG. 1b is a diagram of a structure of a display 001 to which a force is applied. In FIG. 1b, the display 001 includes a protective film 002 and the screen 003. In FIG. 1a and FIG. 1b, an arrow indicates a direction in which the force is applied to the display. In FIG. 1a, the screen 003 is likely to be deformed under effect of the external force. In FIG. 1b, the screen 003 is not likely to be deformed under effect of the external force due to protection provided by the protective film 002.

It can be learned that a screen in a display usually needs to be protected by a film assembly, to reduce a possibility that the display is damaged. A protection capability of an existing protective film is limited and needs to be improved.

### SUMMARY

Embodiments of this application provide an electronic device, a display, a protective film assembly, and a protective film and a preparation method therefor, to improve protection effect of the protective film on the display.

To achieve the foregoing objective, this application uses the following technical solutions.

According to a first aspect of this application, a protective film is provided and is used in a display. The protective film includes a first film layer and a second film layer, the second film layer is connected to at least one surface of the first film layer, and compared with the first film layer, at least one second film layer is closer to a surface of a light exit side of the display. The first film layer includes a reinforcing material and a base material that are mixed, an elastic modulus of the reinforcing material is greater than an elastic modulus of the reinforcing material, and an elastic modulus of the first film layer is greater than an elastic modulus of the second film layer. After the protective film is impacted by an external force, the second film layer with the small elastic modulus first cushions the external force, to reduce an impact force transferred to the first film layer, and the large elastic modulus of the first film layer can reduce deformation of the first film layer caused by the impact force, to reduce a deformation amount. After the external force cushioned by the first film layer and the second film layer reaches the display, damage to the display is greatly reduced.

With reference to the first aspect, in some implementations, the elastic modulus of the first film layer is greater than or equal to 10 GPa. Therefore, the first film layer can provide strong support, and improve cushioning performance.

With reference to the first aspect, in some implementations, the elastic modulus of the second film layer is 2 GPa to 8 GPa. The second film layer can provide excellent cushioning performance, and reduce a force transferred to the second film layer.

With reference to the first aspect, in some implementations, the elastic modulus of the reinforcing material is greater than or equal to 30 GPa. The reinforcing material provides a good basis for supporting performance of the first film layer. In addition, the reinforcing material can increase the elastic modulus of the first film layer.

With reference to the first aspect, in some implementations, a transmittance of the first film layer is greater than or equal to 92%. Therefore, the first film layer has little negative impact on optical performance of the display.

With reference to the first aspect, in some implementations, the first film layer includes a reinforcing material and a base material that are mixed.

A difference between a refractive index of the reinforcing material and a refractive index of the base material is less than or equal to 0.01. In this case, a length-to-diameter ratio of the reinforcing material is greater than or equal to 100, and the difference between the refractive index of the reinforcing material and the refractive index of the base material is small, so that the first film layer has a good transmittance and a good optical uniformity.

With reference to the first aspect, in some implementations, the elastic modulus of the reinforcing material is greater than or equal to 30 GPa.

With reference to the first aspect, in some implementations, the elastic modulus of the base material is 1 GPa to 10 GPa. In this case, the base material may adjust the elastic modulus of the first film layer, so that the elastic modulus of the first film layer can reach the foregoing level.

With reference to the first aspect, in some implementations, the reinforcing material is a fiber. In this case, the fiber and the base material are mixed to form a mesh structure, and the mesh structure can improve an impact resistance capability of the first film layer. In this way, an energy dissipation capability of the first film layer is improved.

With reference to the first aspect, in some implementations, a diameter of the reinforcing material is less than or equal to 10 µm. In this case, a first film layer with a thickness less than or equal to 10 µm may be prepared. In this way, the first film layer has a small thickness and an excellent impact resistance capability.

With reference to the first aspect, in some implementations, the base material includes a polymerization product of at least one of the following monomers: benzenedicarboxylic acid, adipic acid, ethylene glycol, and propylene glycol. In this case, the refractive index of the base material and the elastic modulus of the base material may be adjusted by selecting a monomer and a monomer ratio, to obtain a base material with a preset refractive index and a preset elastic modulus.

With reference to the first aspect, in some implementations, the protective film further includes an adhesive layer, the adhesive layer is connected to the first film layer or the second film layer, and the adhesive layer is configured to connect to the display.

According to a second aspect, a protective film assembly is provided. The protective film assembly includes a first release film, a second release film, and the protective film according to any one of the first aspect and implementations of the first aspect. The first release film and the second release film cover two opposite surfaces of the protective film respectively. In this case, the protective film assembly may be attached to a surface of a display, to provide excellent support for the display.

According to a third aspect, a display is provided. The display includes a light emitting layer, a polarizer, a cover plate, and the protective film according to any one of the first aspect and implementations of the first aspect that are stacked. At least one second film layer is located on a surface of a light exit side of the display. Under protection effect of the protective film, the display can avoid damage to the display caused by an impact force, for example, avoid a crack, a dent, and the like on the display.

With reference to the third aspect, in some implementations, the display is a flexible display. The foregoing protective film has excellent bending performance, and still has protection effect on the display after being bent.

According to a fourth aspect, an electronic device is provided. The electronic device includes a housing and the display according to any one of the second aspect. The housing is connected to the display. The electronic device has advantages of the foregoing display. The display has a good impact resistance capability, and can prolong a service life of the electronic device.

According to a fifth aspect, a preparation method for a protective film is provided, including: forming a first film layer by mixing a reinforcing material and a base material, where a difference between a refractive index of the reinforcing material and a refractive index of the base material is less than or equal to 0.01, and an elastic modulus of the reinforcing material is greater than an elastic modulus of the base material; and forming a second film layer on at least one surface of the first film layer, where an elastic modulus of the second film layer is less than an elastic modulus of the first film layer. In this case, the obtained protective film has good light transmission performance and excellent protection effect.

With reference to the fifth aspect, in some implementations, the forming a first film layer by mixing a reinforcing material and a base material includes: preparing the base material by polymerizing a monomer, where the monomer is at least one of the following: benzenedicarboxylic acid, adipic acid, ethylene glycol, and propylene glycol; melting the base material; mixing the reinforcing material and the molten base material; and forming the first film layer through extrusion and film formation. In this case, a content of each monomer may be selected according to a required refractive index.

### BRIEF DESCRIPTION OF DRAWINGS

FIG. 1a is a diagram of a structure of a screen to which a force is applied;
FIG. 1b is a diagram of a structure of a display to which a force is applied;
FIG. 2 is a diagram of an exploded structure of an electronic device according to an embodiment of this application;
FIG. 3a is a diagram of a structure of a display according to an embodiment of this application;
FIG. 3b is a diagram of an internal structure of a display according to an embodiment of this application;
FIG. 4a is a diagram of a structure of a protective film assembly;
FIG. 4b is a diagram of a structure of another protective film assembly;
FIG. 5a is a diagram of an internal structure of a protective film according to an embodiment of this application;
FIG. 5b is a diagram of a structure of another protective film according to an embodiment of this application;
FIG. 6a is a diagram of a structure of a display including the protective film shown in FIG. 5a;
FIG. 6b is a diagram of a structure of a display including the protective film shown in FIG. 5b;
FIG. 7 is a flowchart of preparation for a first film layer according to an embodiment of this application; and
FIG. 8 is a flowchart of S1 in FIG. 7.

Reference numerals: 001: display; 002: protective film; 003: screen; 010: protective film assembly; 020: polyester film layer; 030: polyurethane film layer; 040: polyurethane particle; 01: electronic device; 11: cover; 12: display; 13: middle frame; 14: rear housing; 100: protective film; 101: light emitting layer; 102: polarizer; 103: cover plate; 104: support member; 110: first film layer; 120: second film layer; 130: adhesive layer; 140: coating.

### DESCRIPTION OF EMBODIMENTS

To make objectives, technical solutions, and advantages of this application clearer, the following further describes this application in detail with reference to accompanying drawings.

The terms "first", "second", and the like mentioned below are merely intended for a purpose of description, and shall not be understood as an indication or implication of relative importance or implicit indication of a quantity of indicated technical features. Therefore, a feature defined by "first", "second", or the like may explicitly or implicitly include one or more features. In the descriptions of this application, unless otherwise stated, "a plurality of" means two or more than two.

In addition, in this application, orientation terms such as "upper" and "lower" are defined relative to an illustrative position of a component in the accompanying drawings. It should be understood that these orientation terms are relative concepts and are used for relative description and clarification, and may vary accordingly depending on a change in a position in which a component is placed in the accompanying drawings.

An embodiment of this application provides an electronic device. The electronic device may be a product having a display interface such as a tablet computer, a mobile phone, an e-reader, a remote control, a personal computer (personal computer, PC), a notebook computer, a personal digital assistant (personal digital assistant, PDA), a vehicle-mounted device, a web television, a wearable device, or a television, or an intelligent display wearable product such as a smart watch or a smart band. A form of the electronic device is not specifically limited in embodiments of this application.

FIG. 2 is a diagram of an exploded structure of an electronic device 01 according to an embodiment of this application. As shown in FIG. 2, the electronic device 01 includes a cover 11, a display 12, a middle frame 13, and a rear housing 14. The rear housing 14 and the display 12 are located on two sides of the middle frame 13 respectively, the middle frame 13 and the display 12 are disposed in the rear housing 14, the cover 11 is disposed on a side that is of the display 12 and that is away from the middle frame 13, and a display surface of the display 12 faces the cover 11.

Electronic components such as a printed circuit board (printed circuit board, PCB), a battery, and a camera in the electronic device 01 may be disposed on the middle frame 13.

Structures of the cover 11 and the rear housing 14 are not limited in embodiments of this application, and may be set according to a purpose of the electronic device 01.

A structure of the display 12 is not limited in embodiments of this application. For example, in some embodiments, the display 12 is a flexible display. Alternatively, in some embodiments, the display 12 is a non-flexible display.

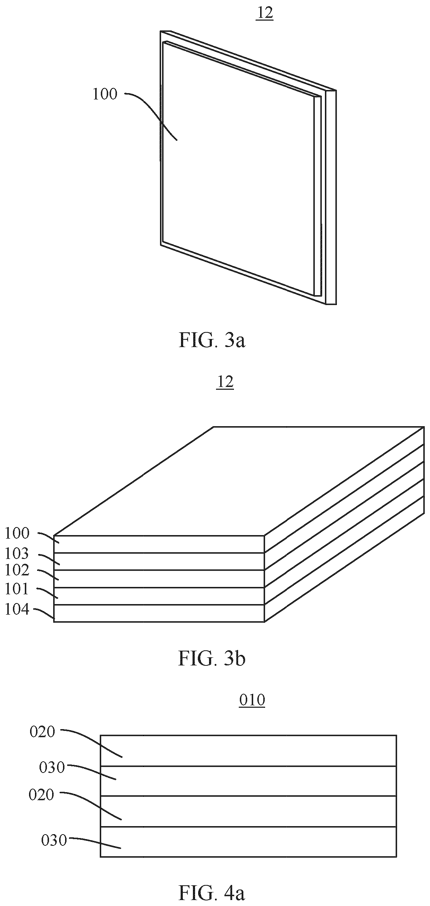

FIG. 3a is a diagram of a structure of a display 12 according to an embodiment of this application. In FIG. 3a, the display 12 includes a protective film 100, and the protective film 100 is located on a surface of the display 12.

Relative sizes of the protective film 100 and the display 12 are not limited in embodiments of this application. In FIG. 3a, a size of the protective film 100 is approximately equal to that of the display 12. The protective film 100 covers the entire display 12, so that the protective film 100 protects the display 12 to a maximum extent.

FIG. 3b is a diagram of an internal structure of a display 12 according to an embodiment of this application. Refer to FIG. 3b. The display 12 includes a light emitting layer 101, a polarizer 102, a cover plate 103, and a protective film 100. The light emitting layer 101, the polarizer 102, the cover plate 103, and the protective film 100 are stacked.

Structures of the light emitting layer 101, the polarizer 102, and the cover plate 103 are not limited in embodiments of this application.

In some embodiments, the display 12 further includes a support member 104, and the support member 104 is connected to a surface that is of the light emitting layer 101 and that is away from the polarizer 102.

A structure of the support member 104 is not limited in embodiments of this application.

The protective film 100 is configured to protect the light emitting layer 101, the polarizer 102, and the cover plate 103, to avoid damage to the light emitting layer 101, the polarizer 102, or the cover plate 103 caused by impact of an external force.

In an embodiment in which the display 12 is a flexible display, a material of the cover plate 103 is a plurality of layers of flexible film materials, and the plurality of layers of flexible film materials are bonded by using an adhesive. Under effect of an external force, the cover plate 103 formed by bonding the flexible film materials is more likely to be damaged. Therefore, protection effect of the protective film 100 is particularly important.

FIG. 4a is a diagram of a structure of a protective film assembly 010. In FIG. 4a, the protective film assembly 010 includes a plurality of polyester film layers 020 and a plurality of polyurethane film layers 030, and the polyester film layers 020 and the polyurethane film layers 030 are alternately disposed.

In FIG. 4a, because the polyester film layers 020 have high hardness and the polyurethane film layers 030 have good cushioning performance, the protective film assembly 010 can protect a display from cracking. However, a dent is likely to be formed on the protective film assembly 010 after impact of an external force, and the dent is not easy to restore, which affects subsequent use. In addition, a large quantity of polyester film layers 020 and polyurethane film layers 030 are needed in the protective film assembly 010 to make the protective film assembly 010 have excellent protection performance, and consequently, the protective film assembly 010 is thick.

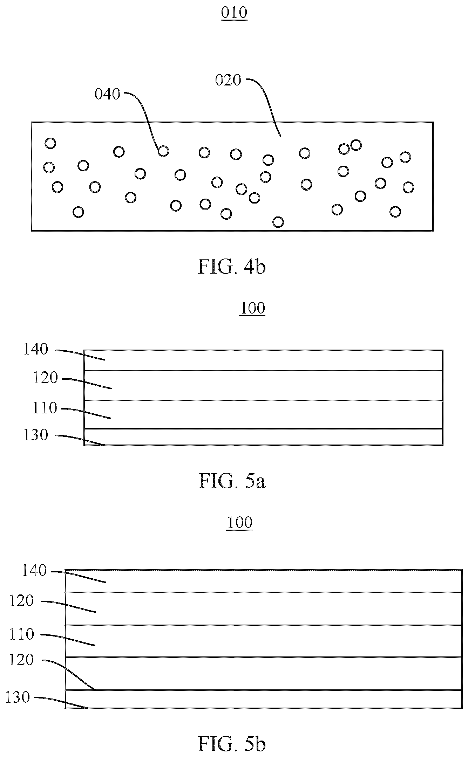

FIG. 4b is a diagram of a structure of another protective film assembly 010. In FIG. 4b, the protective film assembly 010 includes polyurethane particles 040 and a polyester film layer 020, and the polyurethane particles 040 are dispersed in the polyester film layer 020. When a display is impacted by an external force, the protective film assembly 010 can protect the display from cracking. However, a transmittance of the protective film assembly 010 is poor, causing a poor optical uniformity of the display and affecting use of the display.

Therefore, an embodiment of this application provides a protective film 100, to provide excellent protection performance for the display 12.

FIG. 5a is a diagram of an internal structure of a protective film 100 according to an embodiment of this application. In FIG. 5a, the protective film 100 includes a first film layer 110 and a second film layer 120. The second film layer 120 is connected to at least one surface of the first film layer 110. Compared with the first film layer 110, at least one second film layer 120 is closer to a surface of a light exit side of the display 12.

For example, in an embodiment in which the second film layer 120 is connected to one surface of the first film layer 110, compared with the first film layer 110, the second film layer 120 is closer to the surface of the light exit side of the display 12. In an embodiment in which second film layers 120 are connected to two surfaces of the first film layer 110, compared with the first film layer 110, a second film layer 120 connected to one of the surfaces is closer to the surface of the light exit side of the display 12.

The first film layer 110 includes a reinforcing material and a base material that are mixed. An elastic modulus of the base material is greater than an elastic modulus of the reinforcing material, and an elastic modulus of the first film layer 110 is greater than an elastic modulus of the second film layer 120.

Therefore, the reinforcing material can increase the elastic modulus of the first film layer 110, so that the first film layer 110 has advantages of good support strength and good cushioning performance.

The elastic modulus of the first film layer 110 is greater than or equal to 10 GPa. For example, the elastic modulus of the first film layer 110 is 10 GPa, 12 GPa, 14 GPa, 15 GPa, 18 GPa, 20 GPa, 23 GPa, 25 GPa, 28 GPa, 30 GPa, or the like. The first film layer 110 provides strong support for the protective film 100.

The elastic modulus of the second film layer 120 is 2 GPa to 8 GPa. For example, the elastic modulus of the second film layer 120 is 2 GPa, 3 GPa, 4 GPa, 5 GPa, 6 GPa, 7 GPa, 8 GPa, or the like.

In this case, when the display 12 is impacted by an external force, the second film layer 120 with the small elastic modulus first cushions the external force, to reduce an impact force transferred to the first film layer 110, and the large elastic modulus of the first film layer 110 can reduce deformation of the first film layer 110 caused by the impact force, to reduce a deformation amount. After the external force cushioned by the first film layer 110 and the second film layer 120 reaches the cover plate 103, damage to the cover plate 103 is greatly reduced.

Compared with the protective film assembly 010 in FIG. 4a, a combination of the elastic modulus of the first film layer 110 and the elastic modulus of the second film layer 120 is more appropriate. A dent formed on the protective film 100 provided in this embodiment of this application is small, and the second film layer 120 and the first film layer 110 in the foregoing elastic modulus range can quickly restore the dent. In addition, in FIG. 4a, the polyester film layers 020 have almost no cushioning effect. The polyester film layers 020 need to be thick to make the polyester film layers 020 provide excellent cushioning, and consequently, the protective film assembly 010 is thick. A thickness of the protective film 100 provided in this embodiment of this application may be small.

In embodiments of this application, a method for measuring the elastic modulus (elastic modulus or modulus of elasticity) may be, for example, as follows:

A universal testing machine is used to test a sample with dimensions of 35 mm*5 mm, where a fixture spacing is 25 mm. The sample is stretched at a speed of 10 mm/min to obtain a stress-strain curve, and data with a strain of 0.2% to 0.5% is used to calculate an elastic modulus corresponding to the sample. The test is repeated for five times, and an average value is taken to obtain a final elastic modulus.

In embodiments of this application, the first film layer 110 may be formed by stacking a plurality of layers of films, or may be one layer of film. Similarly, the second film layer 120 may also be formed by stacking a plurality of layers of films, or may be one layer of film. This is not limited in this application.

Still refer to FIG. 5a. In some embodiments of this application, the protective film 100 further includes an adhesive layer 130, the adhesive layer 130 is connected to the first film layer 110 or the second film layer 120, and the adhesive layer 130 is configured to connect to the cover plate 103.

A material of the adhesive layer 130 is not limited in embodiments of this application. For example, the material of the adhesive layer 130 is an optical clear adhesive (optical clear adhesive, OCA).

A quantity of first film layers 110 and a quantity of second film layers 120 are not limited in embodiments of this application. In FIG. 5a, there is one first film layer 110, and there is one second film layer 120.

Alternatively, in some embodiments, there may be a plurality of first film layers 110 and a plurality of second film layers 120. For example, one first film layer 110, one second film layer 120, and one first film layer 110 are connected in a stacked manner.

In FIG. 5a, the protective film 100 further includes a coating 140, and the coating 140 is connected to a surface that is of the second film layer 120 and that is away from the first film layer 110.

During use, the coating 140 is located on a surface of the display 12.

A material of the coating 140 is not limited in embodiments of this application. For example, the coating 140 may be at least one of the following: an anti-fingerprint (anti-fingerprint, AF) coating, an anti-reflection (anti-reflection, AR) coating, an anti-glare (anti-glare, AG) coating, or a hard coating (hard coating, HC).

FIG. 5b is a diagram of a structure of another protective film 100 according to an embodiment of this application. In FIG. 5b, the protective film 100 includes two second film layers 120 and one first film layer 110. A quantity of second film layers 120 is larger, the protective film 100 is thicker, and a cushioning capability of the protective film 100 is better.

Similarly, in the example in FIG. 5b, the protective film 100 may also include a coating 140. For descriptions of the coating 140, refer to the descriptions of the example shown in FIG. 5a. Details are not described herein again.

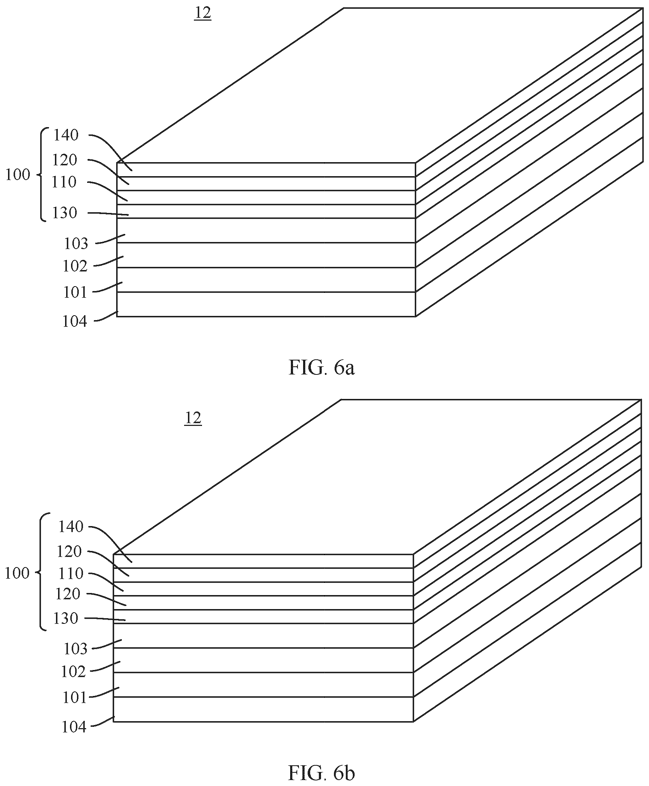

FIG. 6a is a diagram of a structure of a display 12 including the protective film 100 shown in FIG. 5a. In FIG. 6a, the display 12 includes one first film layer 110 and one second film layer 120.

After the display 12 in FIG. 6a is impacted by an external force, the second film layer 120 with a small elastic modulus first cushions the external force, and deformation of the second film layer 120 is small, so that an impact force reaching the first film layer 110 is reduced. After the first film layer 110 with a large elastic modulus performs cushioning again, an action force applied by the first film layer 110 to the display 12 is small, and a probability that the display 12 is deformed is low, so that the display 12 can be well protected.

FIG. 6b is a diagram of a structure of a display 12 including the protective film 100 shown in FIG. 5b. In FIG. 6b, the display 12 includes one first film layer 110 and two second film layers 120. The two second film layers 120 are connected to two surfaces of the first film layer 110 respectively.

Refer to the foregoing analysis of the force applied to the display 12 in FIG. 6a. After the display 12 in FIG. 6b is impacted by an external force, because there are two second film layers 120, a second film layer 120 close to the display 12 can cushion an impact force again, thereby further improving protection effect on the display 12.

In another embodiment, the protective film 100 may alternatively include a plurality of first film layers 110 and a plurality of second film layers 120, and the first film layers 110 and the second film layers 120 are spaced apart.

A structure of the second film layer 120 is not limited in embodiments of this application.

In some embodiments of this application, a transmittance of the second film layer 120 is greater than or equal to 92%. For example, the transmittance of the second film layer 120 is 92%, 93%, 94%, 95%, 96%, 97%, 98%, or the like. In this way, the second film layer 120 has little impact on light emitted by the light emitting layer 101.

A material of the second film layer 120 is not limited in embodiments of this application. For example, the material of the second film layer 120 may be poly(ethylene terephthalate) (poly(ethylene terephthalate), PET), clear polyimide (clear polyimide, CPI), polyethylene (polyethylene, PE), poly(ethylene adipate) (poly(ethylene adipate), PEA), poly(3-hydroxybutyrate) (poly(3-hydroxybutyrate), P(3HB)), poly(1,3-propylene adipate) (poly(1,3-propylene adipate), PPA), polycarbonate (polycarbonate, PC), or the like.

An elastic modulus of the second film layer 120 may be adjusted by adjusting a degree of polymerization of each monomer in the material.

A structure of the first film layer 110 is not limited in embodiments of this application.

In some embodiments of this application, a transmittance of the first film layer 110 is greater than or equal to 92%. For example, the transmittance of the first film layer 110 is 92%, 93%, 94%, 95%, 96%, 97%, 98%, or the like. In this way, the first film layer 110 has little impact on light emitted by the light emitting layer 101.

In an embodiment in which impact on optical performance of the display 12 is not great, the transmittance of the first film layer 110 may be 85%, 87%, 90%, or the like.

A thickness of the first film layer 110 is not limited in embodiments of this application. For example, the thickness of the first film layer 110 may be 2 µm, 4 µm, 5 µm, 6 µm, 7 µm, 8 µm, 9 µm, 10 µm, or the like.

A material of the first film layer 110 is not limited in embodiments of this application. For example, the first film layer 110 includes a reinforcing material and a base material that are mixed.

Mass ratios of the reinforcing material and the base material are not limited in embodiments of this application, and the mass ratios of the reinforcing material and the base material are adjusted based on a target elastic modulus of the first film layer 110.

For example, the reinforcing material accounts for 5% to 15% of total mass of the first film layer 110. The base material accounts for 85% to 95% of the total mass of the first film layer 110. For example, the reinforcing material accounts for 5%, 6%, 7%, 8%, 9%, 10%, 11%, 12%, 13%, 14%, 15%, or the like of the total mass of the first film layer 110.

A difference between a refractive index of the reinforcing material and a refractive index of the base material is less than or equal to 0.01. For example, the difference between the refractive index of the reinforcing material and the refractive index of the base material may be 0.01, 0.008, 0.007, 0.005, 0.003, 0.002, or the like. In this way, the first film layer 110 has a good transmittance and a good optical uniformity.

Similarly, in some embodiments of this application, the difference between the refractive index of the reinforcing material and the refractive index of the base material may alternatively be greater than 0.01, and an obtained transmittance is small. This may be set according to a requirement on a transmittance of the protective film 100.

For example, Table 1 shows examples of optical performance of the first film layer 110 obtained after the reinforcing material is mixed with the base material with different refractive indexes.

**Table 1**

| Refractive index of the reinforcing material | Refractive index of the base material | Optical uniformity | Transmittance |
|---|---|---|---|
| 1.5 | 1.4 | 93.6% | 92.10% |
| 1.5 | 1.45 | 97.9% | 92.26% |
| 1.5 | 1.49 | 99.8% | 92.36% |

It can be learned from Table 1 that, when the difference between the refractive index of the reinforcing material and the refractive index of the base material is 0.01, the first film layer 110 has a transmittance of 92.36% and an optical uniformity of 99.8%. When the difference between the refractive index of the reinforcing material and the refractive index of the base material is increased, the optical uniformity of the first film layer 110 is decreased, and the transmittance is decreased accordingly. It indicates that a smaller difference between the refractive index of the reinforcing material and the refractive index of the base material indicates a better optical uniformity, a larger transmittance, and better optical performance of the first film layer 110.

A material of the reinforcing material in the first film layer 110 is not limited in embodiments of this application.

In some embodiments, a length-to-diameter ratio of the reinforcing material is greater than or equal to 100, and an elastic modulus of the reinforcing material is greater than or equal to 30 GPa. In this case, after the reinforcing material and the base material are mixed, a mesh structure may be formed, to provide excellent strength for the first film layer 110. In this way, the first film layer 110 has an excellent energy dissipation function.

For example, the length-to-diameter ratio of the reinforcing material may be 100, 110, 120, 130, 140, 150, 160, 200, or the like.

The elastic modulus of the reinforcing material may be 30 GPa, 32 GPa, 34 GPa, 36 GPa, 38 GPa, 40 GPa, 45 GPa, or the like.

In some embodiments of this application, the reinforcing material is a fiber, and the fiber can provide excellent strength for the first film layer 110.

For example, the reinforcing material may be a glass fiber, a cellulose fiber, or the like.

A cross-sectional shape of the fiber is not limited in embodiments of this application, and may be, for example, a circle.

In some embodiments of this application, a diameter of the reinforcing material is less than or equal to 10 µm. For example, the diameter of the reinforcing material may be 10 µm, 9 µm, 8 µm, 7 µm, 6 µm, 5 µm, 4 µm, 3 µm, 1 µm, or the like. The diameter of the reinforcing material may be selected according to a requirement on a thickness of the first film layer 110.

When the diameter of the reinforcing material is small, the obtained first film layer 110 is thin, which helps reduce the thickness of the first film layer 110.

In addition, because the second film layer 120 can well cushion an external force, and strength of the first film layer 110 can resist a remaining cushioned force, the protective film 100 can provide excellent cushioning even if the thickness of the first film layer 110 is not large. In this way, a thickness of the protective film 100 can be reduced.

A material of the base material in the first film layer 110 is not limited in embodiments of this application.

In some embodiments, an elastic modulus of the base material is 1 GPa to 10 GPa. For example, the elastic modulus of the base material is 1 GPa, 2 GPa, 3 GPa, 4 GPa, 5 GPa, 6 GPa, 7 GPa, 8 GPa, 9 GPa, 10 GPa, or the like. In this way, the base material can provide excellent cushioning performance for the first film layer 110, and make the first film layer 110 present good bending performance.

In some embodiments of this application, the base material includes a polymerization product of at least one of the following monomers: benzenedicarboxylic acid, adipic acid, ethylene glycol, and propylene glycol.

A molar ratio of each monomer is not limited in embodiments of this application, and may be selected based on the elastic modulus of the base material.

In another embodiment of this application, the base material is not limited to a polymerization product of the foregoing monomer. For example, the base material may be poly(ethylene terephthalate) (poly(ethylene terephthalate), PET), clear polyimide (clear polyimide, CPI), polyethylene (polyethylene, PE), poly(ethylene adipate) (poly(ethylene adipate), PEA), poly(3-hydroxybutyrate) (poly(3-hydroxybutyrate), PHBA), poly(1,3-propylene adipate) (poly(propylene adipate), PPA), polycarbonate (polycarbonate, PC), or the like.

A preparation method for the first film layer 110 is not limited in embodiments of this application.

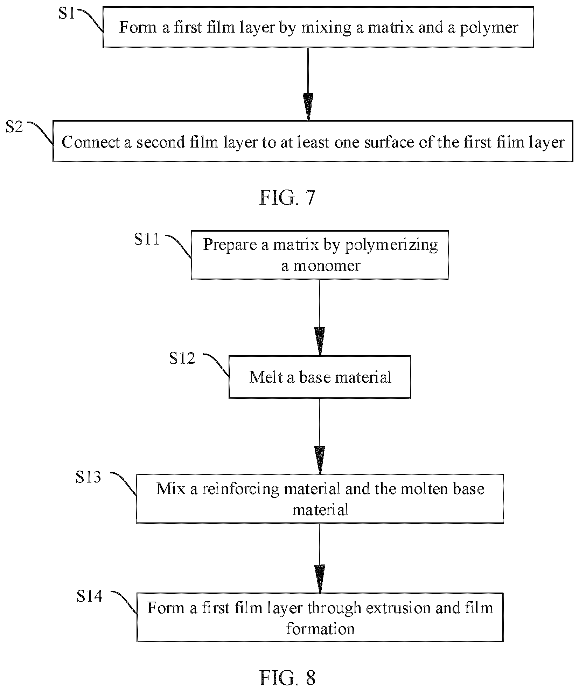

FIG. 7 is a flowchart of preparation for a first film layer 110 according to an embodiment of this application. Refer to FIG. 7. A preparation method for the first film layer 110 includes the following steps.

S1: Form the first film layer 110 by mixing a reinforcing material and a base material.

A manner of mixing the reinforcing material and the base material is not limited in embodiments of this application. For example, a twin-screw extruder is used to mix the reinforcing material and the base material.

A ratio of an amount of the reinforcing material to an amount of the base material may be adjusted based on an elastic modulus of the first film layer 110.

In some embodiments, to fully mix the base material and the reinforcing material, the base material may be first made to be in a molten state. For example, the base material is extruded by the extruder to make the base material be in a molten state, and then the base material is mixed with the reinforcing material.

FIG. 8 is a flowchart of S1 in FIG. 7. Refer to FIG. 8. S1 includes the following steps.

S11: Prepare the base material by polymerizing a monomer.

The monomer is at least one of the following: benzenedicarboxylic acid, adipic acid, ethylene glycol, and propylene glycol. In embodiments of this application, the monomer may be polymerized to form the base material in a manner of polycondensation or copolymerization.

The following describes examples of two preparation methods for the base material.

### Example 1

Terephthalic acid, adipic acid, and ethylene glycol are added into a compatibilizer for mixing, then an esterification reaction and a copolymerization reaction are carried out, and then a solvent is removed, to obtain the base material.

A reaction formula is as follows:

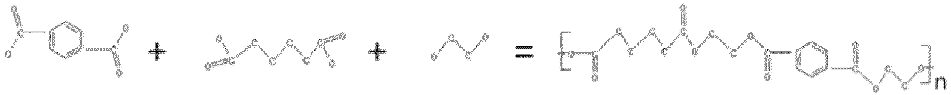

A refractive index and an elastic modulus of the base material may be adjusted by adjusting a ratio of terephthalic acid to adipic acid to ethylene glycol.

For example, a mass ratio of terephthalic acid to adipic acid to ethylene glycol may be (1~10):(1~10):20.

### Example 2

Terephthalic acid, adipic acid, ethylene glycol, and propylene glycol are added into a compatibilizer for mixing, and then condensation and copolymerization are carried out to obtain the base material.

A reaction formula is as follows:

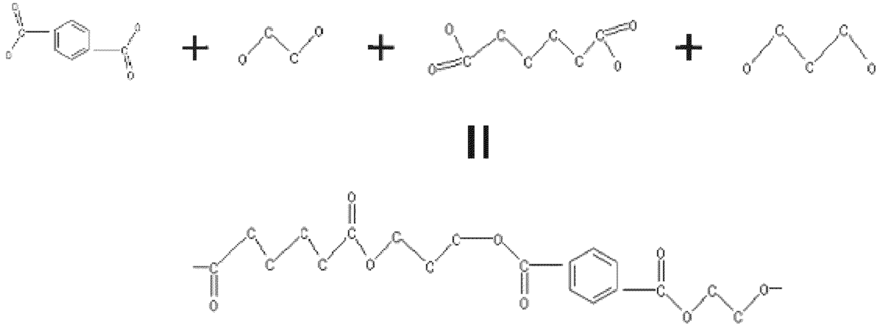

Similarly, a refractive index and an elastic modulus of the base material may be adjusted by adjusting a ratio of terephthalic acid to adipic acid to ethylene glycol to propylene glycol.

For example, a mass ratio of terephthalic acid to adipic acid to ethylene glycol to propylene glycol may be (1~10):(1~10):(1~10):(1~10).

Still refer to FIG. 8. After S11 is performed, the following steps are further included.

S12: Melt the base material.

For example, the twin-screw extruder is used to extrude a matrix to obtain the base material in a molten state. For example, a temperature of the base material in the molten state is greater than 250°C.

S13: Mix the reinforcing material and the molten base material.

For example, the reinforcing material may be a glass fiber. For example, the glass fiber may be fed by using an extruder side feed. The glass fiber has a refractive index of 1.5 and a diameter less than 10 µm. A mass ratio of the base material to the glass fiber may be, for example, (85-95):(5-15).

S14: Form the first film layer through extrusion and film formation.

For example, after a full stir, extrusion is performed to form a thick film. When it is ensured that the thick film is in a high temperature (where a temperature is greater than 200°C) state, the thick film is biaxially stretched to form a film.

Still refer to FIG. 7. After S1 is performed, the following step is further included.

S2: Form a second film layer 120 on at least one surface of the first film layer 110.

Formation is performed according to a requirement on a shape of the first film layer 110. For example, the formation is performed based on size data such as a thickness, a width, and a length of the first film layer 110.

The protective film 100 provided in embodiments of this application has excellent protection effect on the display 12. In addition, the first film layer 110 in the protective film 100 can have both protection effect and excellent optical performance, to reduce impact of the protective film 100 on optical performance of the display 12.

It is clear that the display 12 including the protective film 100 is less damaged under effect and impact of a same external force. This can effectively resolve problems such as cracking, layer separation, and a dent on a surface of the display 12 caused by impact of an external force.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A protective film, wherein the protective film is used in a display, the protective film comprises a first film layer and a second film layer, the second film layer is connected to at least one surface of the first film layer, and compared with the first film layer, at least one second film layer is closer to a surface of a light exit side of the display; and
the first film layer comprises a reinforcing material and a base material that are mixed, an elastic modulus of the reinforcing material is greater than an elastic modulus of the base material, and an elastic modulus of the first film layer is greater than an elastic modulus of the second film layer.

2. The protective film according to claim 1, wherein the elastic modulus of the first film layer is greater than or equal to 10 GPa.

3. The protective film according to claim 1 or 2, wherein the elastic modulus of the second film layer is 2 GPa to 8 GPa.

4. The protective film according to any one of claims 1 to 3, wherein the elastic modulus of the reinforcing material is greater than or equal to 30 GPa.

5. The protective film according to any one of claims 1 to 4, wherein the elastic modulus of the base material is 1 GPa to 10 GPa.

6. The protective film according to any one of claims 1 to 5, wherein a length-to-diameter ratio of the reinforcing material is greater than or equal to 100.

7. The protective film according to any one of claims 1 to 6, wherein a difference between a refractive index of the reinforcing material and a refractive index of the base material is less than or equal to 0.01.

8. The protective film according to any one of claims 3 to 5, wherein the reinforcing material is a fiber.

9. The protective film according to any one of claims 1 to 8, wherein the base material comprises a polymerization product of at least one of the following monomers: benzenedicarboxylic acid, adipic acid, ethylene glycol, and propylene glycol.

10. The protective film according to any one of claims 1 to 9, wherein the protective film further comprises an adhesive layer, the adhesive layer is connected to the first film layer or the second film layer, and the adhesive layer is configured to connect to the display.

11. A protective film assembly, wherein the protective film assembly comprises a first release film, a second release film, and the protective film according to any one of claims 1 to 10, and the first release film and the second release film cover two opposite surfaces of the protective film respectively.

12. A display, wherein the display comprises a light emitting layer, a polarizer, a cover plate, and the protective film according to any one of claims 1 to 10 that are stacked, and compared with the first film layer, at least one second film layer is closer to a surface of a light exit side of the display.

13. The display according to claim 12, wherein the display is a flexible display.

14. An electronic device, wherein the electronic device comprises a housing and the display according to claim 12 or 13, and the housing is connected to the display.

15. A preparation method for a protective film, comprising:
forming a first film layer by mixing a reinforcing material and a base material, wherein a difference between a refractive index of the reinforcing material and a refractive index of the base material is less than or equal to 0.01, and an elastic modulus of the reinforcing material is greater than an elastic modulus of the base material; and
forming a second film layer on at least one surface of the first film layer, wherein an elastic modulus of the second film layer is less than an elastic modulus of the first film layer.

16. The preparation method for a protective film according to claim 15, wherein the forming a first film layer by mixing a reinforcing material and a base material comprises:
preparing the base material by polymerizing a monomer, wherein the monomer is at least one of the following: benzenedicarboxylic acid, adipic acid, ethylene glycol, and propylene glycol;
melting the base material;
mixing the reinforcing material and the molten base material; and
forming the first film layer through extrusion and film formation.
